Europäisches Patentamt

European Patent Office

Office européen des brevets

(19)

(11) Veröffentlichungsnummer: **0 074 522**
**A1**

(12) **EUROPÄISCHE PATENTANMELDUNG**

(21) Anmeldenummer: 82107725.2

(22) Anmeldetag: 23.08.82

(51) Int. Cl.³: **B 65 G 15/16**
**B 65 G 47/34, B 65 G 15/44**

(30) Priorität: 14.09.81 DE 3136338

(43) Veröffentlichungstag der Anmeldung:
23.03.83 Patentblatt 83/12

(84) Benannte Vertragsstaaten:
IT

(71) Anmelder: Conrad Scholtz AG
Am Stadtrand 55/59
D-2000 Hamburg 70(DE)

(72) Erfinder: Paelke, Jürgen
An der Este 13
D-2117 Tostedt(DE)

(74) Vertreter: Lieck, Hans-Peter
Dipl.-Ing. H.-P. Lieck Patentanwalt Maximiliansplatz 10
D-8000 München 2(DE)

(54) Gurtförderer für Steil- und Senkrechtförderung.

(57) Der Wellenkantengurt (1) läuft bis zu bzw. von der oben liegenden Abwurf-Endtrommel (9) in der steilen oder senkrechten Richtung, also ohne zusätzliche Umlenkung am oberen Ende der Förderstrecke. Um die bei dieser Gurtführung insbesondere bei höheren Fördergeschwindigkeiten wegen der Fliehkräfte an sich auftretende ungeordnete Schüttgut-Abgabe zu vermeiden, ist der Abwurftrommel (9) eine Abdeckung in Form eines mitlaufenden Deckbandes (12) mit seitlich aufgesetzten Wellenkanten (13) zugeordnet, das im Umlenkbereich der Abwurftrommel (9) die Wellenkanten (2) des Wellenkantengurtes (1) überdeckt und hinter der Abwurftrommel (9) unter Einschluß eines spitzen, vorzugsweise in seiner Größe verstellbaren Winkels mit dem Rücktrum (16) des Wellenkantengurtes (1) von diesem wegläuft. Das Schüttgut wird dann dort, wo sich das Deckband (12) vom Wellenkantengurt (1) abhebt, in einer geordneten, durch Veränderung des spitzen Winkels beeinflußbaren Abwurfparabel (10) abgegeben.

FIG. 1

Beschreibung

- 1 -

Gurtförderer für Steil- und Senkrechtförderung.

Die Erfindung betrifft einen Gurtförderer für die Steil- und Senkrechtförderung von Schüttgut nach dem Oberbegriff des Anspruches 1.

Ein derartiger Gurtförderer kann als sogenannter L-Förderer ausgelegt sein, was bedeutet, daß das Fördertrum des Fördergurtes in einem Aufgabeabschnitt für das Schüttgut horizontal oder leicht ansteigend läuft und von einer Ablenkeinrichtung hinter der Aufgabestelle in steil ansteigender oder senkrechter Richtung der oben liegenden Abwurftrommel zuläuft, wobei das Rücktrum parallel oder wenigstens ungefähr parallel zum Fördertrum geführt wird. Die der Abwurftrommel zugeordnete, bei bekannten Gurtförderern stationär, zum Beispiel als Prallkasten ausgebildete Abdeckung soll eine Schüttgut-Ausstreuung an der Abwurftrommel verhindern und eine einigermaßen geordnete Abwurfparabel sicherstellen. Bei hohen Fördergeschwindigkeiten - und nur diese sind bei höheren Förderleistungen wirtschaftlich sinnvoll - können jedoch die bekannten Abdeckungen wegen der hohen, auf das Schüttgut an der Abwurftrommel einwirkenden Fliehkräfte die ihnen zugedachte Funktion jedenfalls bei sehr steiler oder senkrechter Förderung nicht erfüllen. Deshalb haben sich für solche Anwendungen die sogenannten L-Förderer in der Praxis auch nicht durchgesetzt.

Eine gewisse Verbesserung der Schüttgut-Abgabe erreicht man mit sogenannten S-Förderern, bei welchen das Fördertrum nach abermaliger Ablenkung am oberen Ende der steilen oder senkrechten Förderstrecke der Abwurftrommel ungefähr horizontal zuläuft. Jedoch sind diese S-Förderer wegen der zweiten Ablenkung für das Fördertrum und der entsprechenden weiteren Ablenkung auch für das Rücktrum baulich wesentlich aufwendiger als die L-Förderer. Hinzu kommt noch der besondere Nachteil, daß sich die Festigkeitsberechnung für den Fördergurt grundsätzlich nur auf die Randzonen des Fördergurtes beziehen darf. Dies liegt an der konkaven Ablenkung des Fördergurt-Rücktrumes hinter der Abwurftrommel von der horizontalen in die steil oder senkrecht nach unten weisende Richtung. Da die entsprechende Ablenkeinrichtung nur an schmalen Randbereichen des Fördergurtes außerhalb seiner Wellenkanten und gegebenenfalls auf dem Kopf der Wellenkanten angreifen kann, verteilt sich die gesamte Zugbelastung des Fördergurtes an der Ablenkeinrichtung praktisch nur auf seine beiden Randbereiche, weshalb in diesen eine erheblich höhere Zugspannung auftritt, als es bei einer gleichmäßigen Verteilung der Zugbelastung über die gesamte Breite des Fördergurtes der Fall wäre. Da aber der Fördergurt über seine gesamte Breite für die größte auftretende Zugspannung zu bemessen ist, ergibt sich hieraus der Bedarf für einen Fördergurt, dessen Gesamtbelastbarkeit größer ist, als es für die vorgegebene Förderleistung an sich notwendig wäre.

Entsprechend liegt der Erfindung die Aufgabe zugrunde, einen Gurtförderer für die Steil- oder Senkrechtförderung von Schüttgut zu schaffen, der bei einem im Vergleich zum S-Förderer geringen baulichen Aufwand und ohne die Notwendigkeit, einen "überdimensionierten" Fördergurt einzusetzen, trotzdem auch bei hohen Fördergeschwindigkeiten eine geordnete, praktisch ausstreuungsfreie Schüttgut-Abgabe an der Abwurftrommel gewährleistet.

**0074522**

Diese Aufgabe ist erfindungsgemäß mit dem im Anspruch 1 und bezüglich vorteilhafter Ausgestaltungen in den Unteransprüchen gekennzeichneten Gurtförderer gelöst.

Beim erfindungsgemäßen Gurtförderer ist durch die Ausbildung der der Abwurftrommel zugeordneten Abdeckung als Deckband erreicht, daß selbst bei senkrechtem Lauf des Förder- und des Rücktrumes des Fördergurtes vor beziehungsweise hinter der Abwurftrommel eine geordnete, praktisch ausstreuungsfreie Schüttgutabgabe an der Abwurftrommel stattfindet. Hierdurch ist es in der Praxis erstmalig möglich, sich für die Steil- und Senkrechtförderung von Schüttgut die baulichen Vorteile eines sogenannten L-Förderers zunutze zu machen einschließlich des besonderen wichtigen Vorteils, mit einem gerade nur für die benötigte Förderleistung dimensionierten Fördergurt auskommen zu können. Das Deckband im Sinne der Erfindung braucht dem Fördergurt nur im Umlenkbereich der Abwurftrommel zugeordnet zu sein, also nicht etwa auch in der eigentlichen Förderstrecke. Es hat die Funktion, Schüttgut-Anteile, die an der Abwurftrommel quasi vorzeitig durch Fliehkraft unter Überwindung der Schwerkraft abgeschleudert werden, aufzufangen und um die Ablenktrommel herum in die Abwurfparabel überzuleiten, die dadurch zwischen dem von der Abwurftrommel ablaufenden Rücktrum des Fördergurtes und dem aus dem Umlenkbereich der Abwurftrommel weglaufenden Trum des Deckbandes entsteht. Hierzu ist es weder notwendig, daß das Deckband abdichtend auf den Wellenkanten des Fördergurtes aufliegt, noch daß die im Umlenkbereich der Abwurftrommel nach unten weisenden Wellenkanten des Deckbandes eine Berührung mit dem Fördergurt oder dessen Wellenkanten haben, obwohl andererseits auch eine gegenseitige Berührung Deckband und Fördergurt an ihren Wellenkanten möglich ist. Die Führung von Fördergurt und Deckband ohne gegenseitige Berührung ist im Sinne einer Verschleißminderungs sehr günstig, eine gegenseitige Berührung wird sich dann empfehlen, wenn eine besonders hohe Abdichtung, zum Beispiel bei sehr feinkörnigem oder staubigem Gut erwünscht ist.

Ein besonderer Vorteil des erfindungsgemäßen Gurtförderers besteht weiterhin dahin, daß sich die Abwurfparabel des Schüttgutes in ihrem Verlauf leicht steuern läßt, und zwar durch entsprechende Wahl des Winkels zwischen dem Rücktrum des Fördergurtes und dem aus dem Umlenkbereich weglaufenden Trum des Deckbandes. So kann man leicht unterschiedliche Förder-Geschwindigkeiten zum Beispiel in Abhängigkeit von der Korngröße des jeweils geförderten Schüttgutes berücksichtigen. Eine zweckmäßige bauliche Ausgestaltung des Gurtförderers zur Steuerung der Abwurfparabel geht aus den Ansprüchen 9 und 10 hervor.

Die Führung des Deckbandes im Umlenkbereich der Abwurftrommel geschieht am besten mit den Mitteln des Anspruches 6. Alternativ können statt der zwei Scheibenräder zwei Reihen Stummelrollen vorgesehen sein, was insbesondere für leichtere oder kleinere Gurtförderer nach der Erfindung infrage kommt.

Im folgenden ist die Erfindung anhand eines schematisch dargestellten Ausführungsbeispieles näher erläutert. In der Zeichnung zeigen:

Figur 1 einen Ausschnitt aus einem L-Gurtförderer für Senkrechtförderung mit dem oberen Ende der senkrechten Förderstrecke und dem mitlaufenden Deckband in Seitenansicht;

Figur 2 einen Querschnitt längs der Linie II-II in Figur 1.

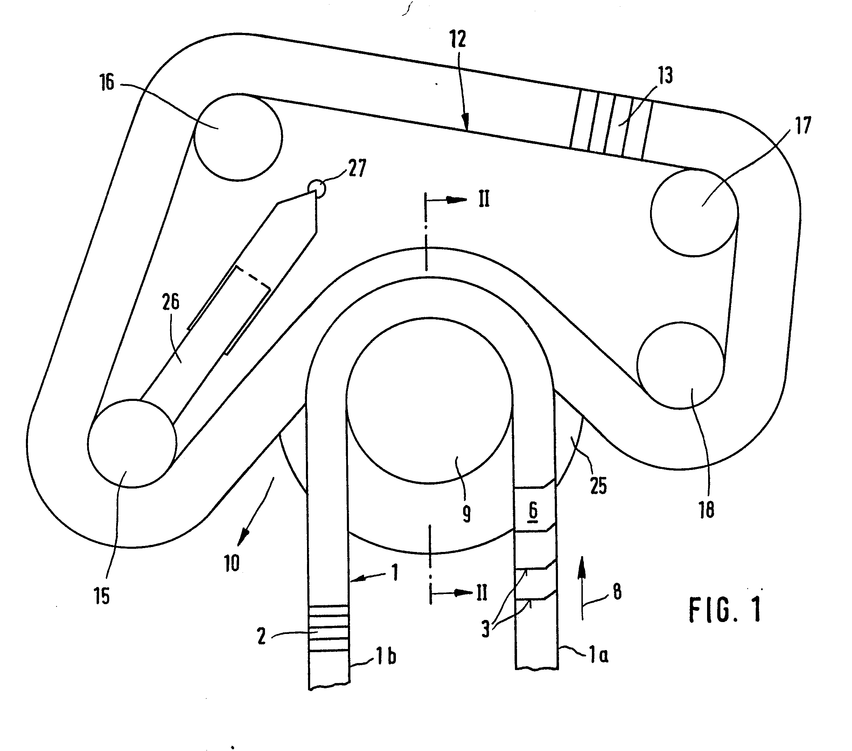

Der in Figur 1 gezeigte Gurtförderer für die Senkrechtförderung von Schüttgut arbeitet mit einem Fördergurt 1 aus Gummi oder dergleichen in üblicher Ausbildung, der mit zwei seitlichen, vom Fördergurt ungefähr senkrecht wegstehenden Wellenkanten 2 ebenfalls üblicher Ausbildung besetzt ist, wobei jedoch in Figur 1 nur die eine Wellenkante schematisch, das heißt ohne Darstellung ihrer Wellen gezeigt ist. In regelmäßigen Längsabständen sind auf dem Fördergurt 1 quer zur Fördergurtlängsrichtung ausgerichtete, abgewinkelte Mitnehmerleisten 5 angebracht, die den Raum zwischen den Wellenkanten in einzelne Förderräume 6 unterteilen.

Bei dem gezeigten Ausführungsbeispiel handelt es sich um einen L-Förderer, bei welchem der Fördergurt mit seinem Fördertrum 1a und auch mit seinem Rücktrum 1b im Bereich einer Fördergu taufgabe in nicht näher gezeigter Weise entweder horizontal oder in Förderrichtung leicht ansteigend geführt ist. Hinter der Fördergutaufgabe erfolgt eine Ablenkung des Fördertrumes 1a in die senkrechte Richtung, so daß der Fördergurt in senkrechter Richtung einer oberen Abwurftrommel 9 zuläuft. An dieser wird er um 180$^{o}$ umgelenkt und läuft als Rücktrum 1b ebenfalls in senkrechter Richtung von der Abwurftrommel 9 weg. Hierdurch wird das Schüttgut in Förderrichtung 8 bis zur Abwurftrommel 9 angehoben und an dieser an einer Abgabestelle 10 ausgeschüttet.

Der Abwurftrommel 9 ist eine Abdeckung in Form eines mitlaufenden Deckbandes 12 zugeordnet. Das Deckband 12 ist ebenfalls aus Gummi oder dergleichen in üblicher Ausbildung hergestellt und mit mit zwei seitlichen, vom Deckband 12 ungefähr senkrecht nach außen wegstehenden Wellenkanten 13 ebenfalls üblicher Ausbildung besetzt, wobei in Figur 1 lediglich die eine Wellenkante schematisch, ohne Darstellung ihrer Wellen gezeigt ist. Das endlose Deckband 12 ist durch mindestens drei, im vorliegenden Ausführungsbeispiel vier Deckband-Umlenktrommeln 15, 16, 17 und 18 geführt.

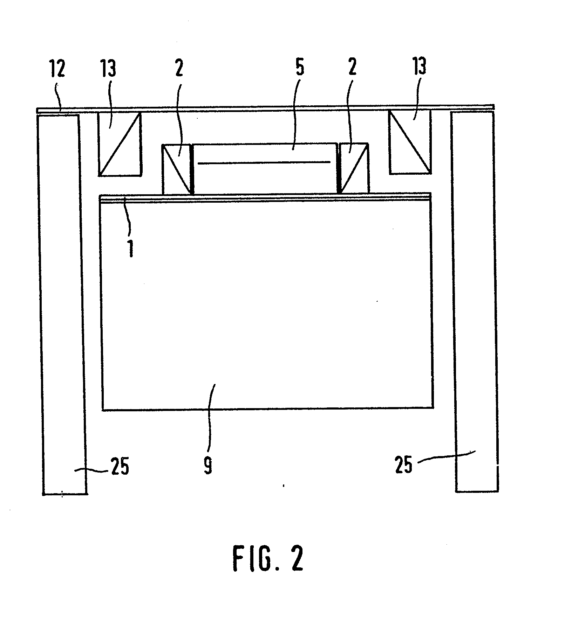

Zwischen den Umlenktrommeln 18 und 15 im Umlenkbereich der Abwurftrommel 9 läuft das Deckband 12 auf zwei Scheibenrädern 25, vergleiche Figur 2, die beidseitig der Abwurftrommel 9 angeordnet sind und auf der gleichen Drehachse wie diese, jedoch getrennt davon gelagert sind. Die Scheibenräder greifen an schmalen Randbereichen des Deckbandes außerhalb dessen Wellenkanten 13 an. Die Scheibenräder 25 haben einen größeren Durchmesser als die Abwurftrommel 9 derart, daß der Abstand des Fördergurtes 1 zum Deckband 12 größer ist als die Höhe der Wellenkanten 13 des Deckbandes 12 und auch größer als die Höhe der Wellenkanten 2 und der Mitnehmerleisten 5 des Fördergurtes 1. Außerdem ist die Dimensionierung des Deckbandes so getroffen, daß der quer zur Deckbandrichtung gemessene Innenabstand der Wellenkanten 13 des Deckbandes 12 größer ist als der Außenabstand der Wellenkanten 2 des Fördergurtes 1. Durch entsprechend tiefe Anordnung der Deckband-Umlenktrommeln 18 und 15 ergibt sich eine Führung des Deckbandes derart, daß es mit dem Fördertrum 1a des Fördergurtes unter einem spitzen Winkel zusammenläuft und ebenfalls unter einem spitzen Winkel zum Rücktrum 1b beziehungsweise zur Senkrechten aus dem Umlenkbereich der Abwurftrommel 9 wegläuft, wobei es im Umlenkbereich quasi über den Fördergurt gestülpt ist.

Die Abwurfparabel des geförderten Schüttgutes an der Abwurfstelle 10 entsteht zwischen dem senkrechten Rücktrum 1b und dem mit einem geraden Abschnitt von den Scheibenrädern 25 zur Umlenktrommel 15 sich erstreckenden Deckband. Die Richtung dieser Abwurfparabel kann in einfacher Weise durch eine Lage-Verstellung der Deckband-Umlenktrommel 15 verändert werden. Hierzu ist diese am freien Ende eines in der Länge veränderbaren Schwenk-Hebels 26 gelagert, der zur Abwurfparabel-Steuerung um seinen Drehpunkt 27 geschwenkt wird. Damit das Deckband 12 in jeder Schwenk-Stellung gespannt bleibt, ist der längenveränderliche Hebel 26 ständig druckbeaufschlagt, zum Beispiel durch eine intern angeordnete Feder oder durch ein Hydraulikmedium.

Das Deckband hat einen nicht näher gezeigten eigenen Antrieb, zum Beispiel mittels eines Elektromotors. Wenn über diesen die Geschwindigkeit des Deckbandes verstellbar ist, kann auch durch Wahl einer unterschiedlichen Geschwindigkeit des Deckbandes in bezug auf die des Fördergurtes eine Beeinflussung der Abwurfparabel erreicht werden. Alternativ ist es möglich, auf einen eigenen Antrieb für das Deckband zu verzichten und es vom Fördergurt mitnehmen zu lassen, und zwar entweder durch unmittelbaren Reibschluß mit dem Fördergurt im Umlenkbereich der Abwurftrommel oder durch eine Kopplung der Scheibenräder mit der Abwurftrommel.

Anstelle der Scheibenräder kann in nicht näher gezeigter Weise jeweils eine entsprechend der Bahn des Deckbandes im Umlenkbereich der Abwurftrommel angeordneter Reihe von Stummelrollen vorgesehen sein, die wie die Scheibenräder außerhalb der Wellenkanten 13 an Randbereichen des Deckbandes 12 angreifen.

Ansprüche

1.

Gurtförderer für die Steil-und Senkrechtförderung von
Schüttgut mit einem Fördergurt mit seitlich aufgesetzten
Wellenkanten und dazu quer ausgerichteten, in Fördergurtlängsrichtung in Abständen angeordneten Mitnehmerleisten
aus elastomerem Werkstoff, bei welchem der Fördergurt vor
und hinter einer oben liegenden Abwurftrommel für das
Schüttgut steil oder senkrecht geführt und der Abwurftrommel eine Abdeckung zugeordnet ist,
dadurch gekennzeichnet, daß die Abdeckung durch ein mitlaufendes Deckband (12) mit seitlich aufgesetzten Wellenkanten (13) gebildet ist, das im Umlenkbereich der Abwurftrommel (9) die Wellenkanten (2) und die Mitnehmerleisten
(5) des Fördergurtes (1) überdeckt.

2.

Gurtförderer nach Anspruch 1,
dadurch gekennzeichnet, daß der quer zur Deckbandlängsrichtung gemessene Innenabstand der Wellenkanten (13) des Deckbandes (12) größer ist, als der entsprechende Außenabstand
der Wellenkanten (2) des Fördergurtes (1). .

3.

Gurtförderer nach Anspruch 1 oder 2,
dadurch gekennzeichnet, daß das Deckband (12) im Umlenkbereich der Abwurftrommel (9) parallel zum Fördergurt (1)
geführt ist.

4.

Gurtförderer nach Anspruch 1, 2 oder 3,
dadurch gekennzeichnet, daß im Umlenkbereich der Abwurftrommel (9) der Abstand zwischen Fördergurt (1) und Deckband (12) größer ist als die Höhe der Wellenkanten (2) und Mitnehmerleisten (5) des Fördergurtes (1) und/oder als die Höhe der Wellenkanten (13) des Deckbandes (12).

5.

Gurtförderer nach Anspruch 3,.
dadurch gekennzeichnet, daß die Wellenkanten (2) und Mitnehmerleisten (5) des Fördergurtes (1) und die Wellenkanten (13) des Deckbandes (12) gleiche Höhe haben und dieser im Umlenkbereich der Abwurftrommel (9) der Abstand zwischen Fördergurt (1) und Deckband (12) entspricht.

6.

Gurtförderer nach einem der Ansprüche 1 bis 5,
dadurch gekennzeichnet, daß das Deckband (12) im Umlenkbereich der Abwurftrommel (9) über zwei Scheibenräder (25) läuft, und daß die Abwurftrommel (9) und die beidseitig daran angeordneten Scheibenräder (25) auf der gleichen Drehachse getrennt gelagert sind.

7.

Gurtförderer nach einem der Ansprüche 1 bis 6,
dadurch gekennzeichnet, daß das Deckband (12) hinter der Abwurftrommel (9) über einen Abschnitt seiner Umlaufstrecke unter spitzem Winkel zur Senkrechten geführt ist.

8.

Gurtförderer nach Anspruch 7,
dadurch gekennzeichnet, daß die Größe des spitzen Winkels einstellbar ist.

9.

Gurtförderer nach Anspruch 8, dadurch gekennzeichnet, daß das Deckband (12) von der Abwurftrommel (9) zu einer Deckband-Umlenktrommel (15) läuft, die in ihrer Lage verstellbar ist.

10.

Gurtförderer nach Anspruch 10, dadurch gekennzeichnet, daß die Deckband-Umlenktrommel (15) an einem in der Länge veränderbaren, jeweils die maximale Länge einnehmenden, schwenkbaren Haltearm (26) angebracht ist.

FIG. 1

- 1/2 -

FIG. 2

Europäisches
Patentamt
EUROPÄISCHER RECHERCHENBERICHT
Nummer der Anmeldung
0074522

EP 82 10 7725.2

| Kategorie | EINSCHLÄGIGE DOKUMENTE | betrifft Anspruch | KLASSIFIKATION DER ANMELDUNG (Int. Cl.³) |
|---|---|---|---|
| | Kennzeichnung des Dokuments mit Angabe, soweit erforderlich, der maßgeblichen Teile | | |
| A | DE - C - 1 134 027 (F. CLOUTH RHEINISCHE GUMMIWARENFABRIK AG) <br> * Spalte 1, Zeile 27 bis Spalte 2, Zeile 38; Fig. 1 * <br> -- | 1,3,4, 6-9 | B 65 G 15/16 <br> B 65 G 47/34 <br> B 65 G 15/44 |
| A | US - A - 3 225 903 (PIEMONT) <br> * Spalte 2, Zeilen 13 bis 33; Fig. 1 * <br> -- | 1 | |
| A | FR - A - 575 329 (BOUVIER) <br> * Seite 1, Zeile 46 bis Seite 2, Zeile 20; Fig. 1, 3 * <br> -- | 1 | RECHERCHIERTE SACHGEBIETE (Int. Cl.³) |
| A | DE - A1 - 2 519 447 (C. SCHOLTZ AG) <br> * Ansprüche 1, 4, 5; Fig. 2 * <br> -- | 2,5 | B 65 G 15/00 <br> B 65 G 17/00 <br> B 65 G 47/00 |
| A | DE - C - 1 120 978 (OLESCH) <br> * Anspruch 1; Fig. 2 * <br> ---- | 6 | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. | | |
|---|---|---|---|
| Recherchenort <br> Berlin | Abschlußdatum der Recherche <br> 02-12-1982 | Prüfer <br> SIMON | |

EPA form 1503.1   06.78